(19) **Europäisches Patentamt / European Patent Office / Office européen des brevets**

(11) **EP 2 065 737 B1**

(12) **EUROPEAN PATENT SPECIFICATION**

(45) Date of publication and mention
of the grant of the patent:
**16.03.2016 Bulletin 2016/11**

(51) Int Cl.:
***G02B 6/00*** (2006.01)     ***F21V 8/00*** (2006.01)

(21) Application number: **08169747.6**

(22) Date of filing: **24.11.2008**

(54) **Reflection type display apparatus and method for manufacturing light guide plate**

Reflexionsanzeigevorrichtung und Verfahren zur Herstellung einer Lichtwellenleiterplatte

Appareil d'affichage de type réflexion et procédé pour la fabrication d'une plaque de guidage lumineuse

(84) Designated Contracting States:
**DE FR GB**

(30) Priority: **28.11.2007 KR 20070121905**

(43) Date of publication of application:
**03.06.2009 Bulletin 2009/23**

(73) Proprietor: **Samsung Electronics Co., Ltd.**
**Suwon-si, Gyeonggi-do, 443-742 (KR)**

(72) Inventors:
 • **Lee, Yu Sheop**
 **c/o Samsung Electronics Co., Ltd.**
 **Gyeonggi-do (KR)**
 • **Lee, Joo Hoon**
 **c/o Samsung Electronics Co., Ltd.**
 **Gyeonggi-do (KR)**

 • **Jung, Sun Tae**
 **c/o Samsung Electronics Co., Ltd.**
 **Gyeonggi-do (KR)**

(74) Representative: **Grünecker Patent- und**
**Rechtsanwälte**
**PartG mbB**
**Leopoldstraße 4**
**80802 München (DE)**

(56) References cited:
**EP-A1- 0 878 720**     **EP-A1- 1 357 420**
**EP-A2- 1 424 573**     **WO-A1-99/63394**
**US-A1- 2001 055 076**     **US-A1- 2004 228 112**
**US-B1- 6 522 373**

EP 2 065 737 B1

## Description

CLAIM OF PRIORITY

This application claims priority from an application entitled "REFLECTION TYPE DISPLAY APPARATUS AND METHOD FOR MANUFACTURING LIGHT GUIDE PLATE" filed in the Korean Intellectual Property Office on November 28, 2007 and assigned Serial No. 2007-0121905,

## BACKGROUND OF THE INVENTION

### Field of the Invention

The present invention relates generally to a reflection type display apparatus and a method for manufacturing a light guide plate. More particularly, the invention relates to a reflection type display in the form of a thin film that can be used in an electronic paper display.

### Description of the Related Art

In general, an electronic paper display apparatus displays an image by moving black and white dyes using electric fields and is suitable for use in an information terminal due to its low power consumption. Such an electronic paper display apparatus is a reflection type display apparatus through which light cannot pass due to its material characteristics.

As mentioned above, unlike a liquid crystal display, (i.e. a representative transmission type display), since light cannot pass through such a reflection type display apparatus, the reflection type display apparatus cannot employ an illumination unit such as a back light unit located on the rear surface of a display to directly illuminate the display.. The reflection type display cannot secure night visibility, and uses a front light unit (FLU) for illumination. In other words, a reflection type display displays an image even without using any light source at a place where an external light source is connected thereto, and displays an image by illumination of an FLU at a place without any external light source.

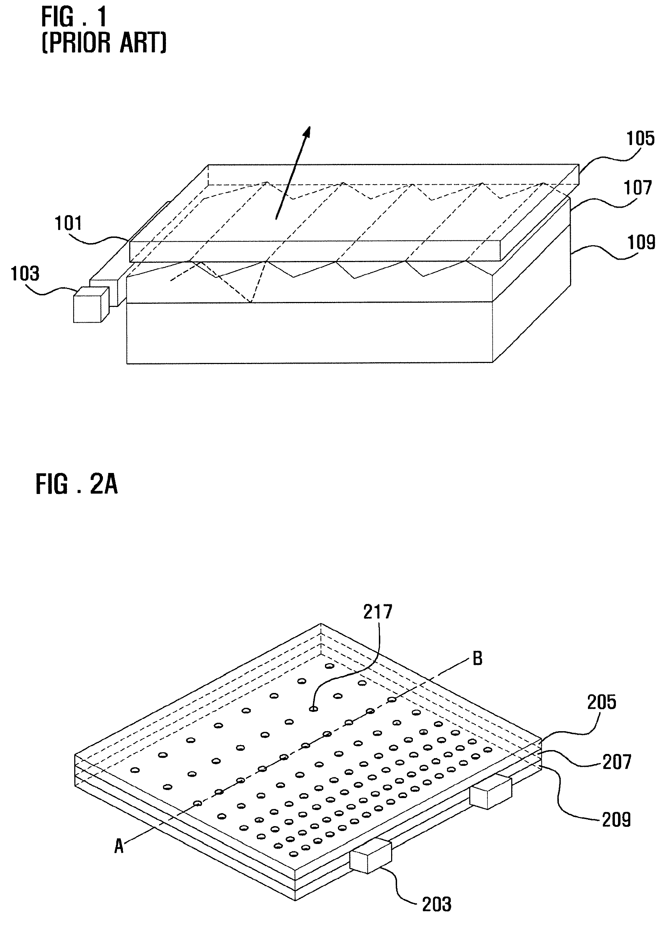

The structure of an FLU of a conventional reflection type display apparatus is illustrated in FIG. 1. FIG. 1 provides a perspective view that schematically illustrates an FLU structure of a conventional reflection type display apparatus.

Referring now to FIG. 1, a conventional FLU includes a light source 103 creating and emitting light, a light guide plate 107, a light bar 101 for introducing the light emitted from the light source 103 into the light guide plate 107. The light guide plate 107 scatters the introduced light.

The light guide plate 107 is provided on the upper surface of the reflection type display 109, and V-shaped grooves are formed on the upper surface of the light guide plate 107. The grooves having a specific angle are linearly or curvedly disposed in the longitudinal direction of the light guide plate 107 and are disposed transversely by a predetermined angle according to a predetermined rule.

If the introduced light reaches the V-shaped grooves, it is reflected by a specific angle according to the angle of the grooves and the difference in indices of refraction between the light guide plate 107 and the exterior. When the angle of the reflected light does not satisfy the condition of total reflection, the light travels outside the light guide plate 107. The light traveling outside the light guide plate 107 is reflected by the reflection type display 109 again and reaches the eyes of a user. When the grooves are distributed over the upper surface of the light guide plate 107, the entire light guide plate 107 is illuminated. The reference numeral 105 indicates a protection film and/or a key film for protection of the light guide plate 107 or formation of keys.

The FLU requires the light bar 101 to introduce the light into the light guide plate 107. Minute grooves (not shown) are formed in the light bar 101. The grooves of the light bar 101 change the direction of the light traveling out of the light source 103 and uniformly introduce the light through a side surface of the light guide plate 107. In other words, the light bar 101 converts a point light source to a line light source. In particular, when the light source 103 is a light emitting diode (LED), the light bar 101 is essential.

Meanwhile, the light guide plate is manufactured through injection molding or mechanical machining. More particularly, the light guide plate is made of an optically transparent material, such as plastic, through injection molding using a mold having V-shaped grooves, or is made by directly machining V-shaped grooves.

However, it is difficult to form grooves in a light guide plate in a thin film because the material is extremely thin. Also, as reflection type display in the form of a thin film have become increasingly popular, it is not preferable to form grooves in the thin film in addition to being difficult to implement. In particular, a reflection type display applied to applications such as a keypad requiring high flexibility requires a thickness of below 0.2 mm, which is impossible using a conventional technology for manufacturing a light guide plate.

Furthermore, since a high-priced mold is used or a mechanical method of low productivity is used in a conventional technology for manufacturing a light guide plate, the price of an FLU increases.

In addition, since there exists sharp border surfaces in V-shaped grooves applied to an FLU due to their characteristics, a user may see the grooves when there is no illumination.

Document US2004/0228112 discloses a light guide plate having an array of cavities formed therein and a film bonded to the surface of the light guide plate containing the cavities.

## SUMMARY OF THE INVENTION

The present invention provides a thin film shaped reflection-type display apparatus as defined by the appended independent device claim 1 and a method for manufacturing a light guide plate. as defined by the appended independent method claim 6. Further details are defined by the dependent claims.

The present invention also provides a low-priced reflection-type display apparatus whose cavities can be rarely seen and a method for manufacturing a light guide plate.

The present invention also provides a reflection-type display apparatus whose cavities are transversely and longitudinally disposed on the upper surface of a light guide plate and a method for manufacturing a light guide plate.

In accordance with an exemplary embodiment of the present invention, there is provided a reflection-type display apparatus comprising: a reflection type display; a light source provided on one side of the reflection type display; a light guide plate bonded to the upper surface of the reflection type display to scatter light introduced from the light source and having cavities transversely and longitudinally disposed by predetermined intervals on the upper surface thereof; and a film bonded to the upper surface of the light guide plate to protect the upper surface of the light guide plate.

The present invention includes a method for manufacturing a light guide plate of a reflection-type display apparatus, the method comprising: manufacturing a mask in a pattern having predetermined size and interval; lithographing cavities in a master stamper by an exposure process and a development process through use of the mask and forming cavities by an etching process; plating nickel on the master stamper and manufacturing a stamper having embossments by removing the master stamper; and forming cavities by pressing and/or heating the material of the light guide plate using the stamper.

According to the present invention, a thin film shaped reflection-type display apparatus is provided by manufacturing a thin film shaped flexible FLU whose cavities can not be seen. In other words, a user cannot see the cavities.

Furthermore, a high-priced mold can be excluded by using a stamper to form the cavities, so as to permit a lower-priced FLU to be manufactured as compared with conventional FLUs.

## BRIEF DESCRIPTION OF THE DRAWINGS

The objects, features and advantages of the present invention will be more apparent from the following detailed description in conjunction with the accompanying drawings, in which:

FIG. 1 is a perspective view schematically illustrating an FLU structure of a conventional reflection type display apparatus;

FIGS. 2A and 2B are a perspective view and a sectional view schematically illustrating an FLU structure of a reflection type display apparatus according to an exemplary embodiment of the present invention;

FIGS. 3A and 3B are views illustrating an application of the FLU of the reflection type display apparatus according to the exemplary embodiment of the present invention and functions of intervals of cavities according to the embodiment of the present invention;

FIG. 4 is a flowchart schematically illustrating a method for manufacturing a light guide plate of the reflection type display apparatus according to the exemplary embodiment of the present invention;

FIGS. 5A to 5G are sectional views schematically illustrating a process of manufacturing the light guide plate of a reflection type display apparatus according to the exemplary embodiment of the present invention;

FIGS. 6A and 6B are photos of cavities formed in the process of manufacturing a light guide plate of the reflection type display apparatus; and

FIG. 7 is a drawing of a terminal to which a reflection type display apparatus according to the exemplary embodiment of the present invention is applied.

Hereinafter, exemplary embodiments of the present invention will be described in detail with reference to the accompanying drawings so that those skilled in the art can easily carry out the present invention. In the detailed description of the exemplary embodiment of the present invention, technologies that are well known in the art and are not directly relevant to the present invention will be omitted so as not to obscure appreciation of the subject matter of the present invention by a person of ordinary skill in the art.

Likewise, in the accompanying drawings, some elements may be omitted, or schematically illustrated, and the sizes of the elements do not reflect their actual sizes for explanatory purposes.

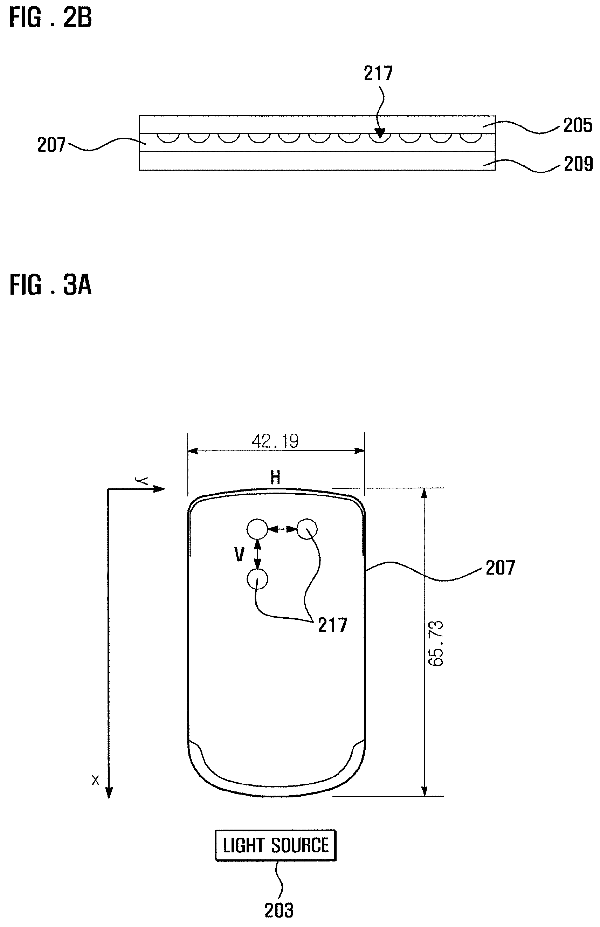

FIGS. 2A and 2B are a perspective view and a sectional view schematically illustrating an FLU structure of a reflection type display apparatus according to an embodiment of the present invention.

Referring now to FIGS. 2A and 2B, the reflection type display apparatus according to the exemplary embodiment of the present invention includes a reflection type display 209, a light source 203 provided on one side of the reflection type display 209, a light guide plate 207 bonded to the upper surface of the reflection type display 209, and a film 205 bonded to the upper surface of the light guide plate 207. In this case, the light source 203 and the light 207 constitute an FLU of the present invention.

The light source 203 creates and emits light. The light source 203 is preferably provided on one side of the reflection type display 209. The light source 203 may be a light emitting diode (LED) or a cold cathode fluorescent lamp (CCFL). Two light sources 203 are illustrated in the drawing, but the present invention is not limited thereto. The number of light sources 203 may be changed according to the size of the reflection type display 209. The FLU according to the exemplary embodiment of the present invention does not need a light bar that was required in the prior art due to cavities 217 of the light guide plate 207 that will be described later.

A minimum interval is provided between the light source 203 and the light guide plate 207 to increase light introduction efficiency. Considering tolerances in an existing assembling process, the interval between the light source 203 and the light plate 207 is preferably below 0.2 mm.

Still referring to FIGs. 2A and 2B, the light guide plate 207 scatters the light introduced from the light source 203. The light guide plate 207 is bonded between the upper surface of the reflection type display 209 and the lower surface of the film 205. The light guide plate 207 is bonded using a highly transparent adhesive or a bonding tape. The light guide plate 207 has a high transparency and is made of plastic such as, for example, polyvinyl chloride (PC), polyethylene terephthalate (PET), polymethylmethacrylate (PMMA), or polyurethane (PU), or silicon.

In the case of an inflexible light guide plate 207, the thickness thereof is preferably about 0.1 to 0.4 mm, and otherwise, 0.1 to 0.2 mm. The flexible light guide plate refers to a light guide plate whose reflection type display apparatus is used as a keypad that can be clicked. In other words, the flexible reflection type display apparatus includes keys that can be pressed by a user. The minimum thickness of the light guide plate 207 is preferably 0.1 mm, whereby the light guide plate guarantees the brightness of 10 nit (nit is a unit of luminance in the MKS unit system and is a brightness of a surface having a light intensity of 1 cd/m2 or 10-4 sb) that is a reference brightness commonly used in the field..

As shown in the example in FIG. 2A, cavities 217 are disposed by predetermined intervals on the upper surface of the light guide plate 207 that is bonded to the film 205. When light is introduced into the light guide plate 207, the light is guided within the light guide plate 207 by the total reflection condition. The guided light reaches a cavity 217, the total reflection condition is broken, whereby some light is refracted to travel out of the light guide plate 207 and some light is reflected to be guided into the light guide plate 207 until it reaches the next cavity 217. In other words, the light introduced into the light guide plate 207 is scattered by the cavities according to its guided distance and is used in illumination.

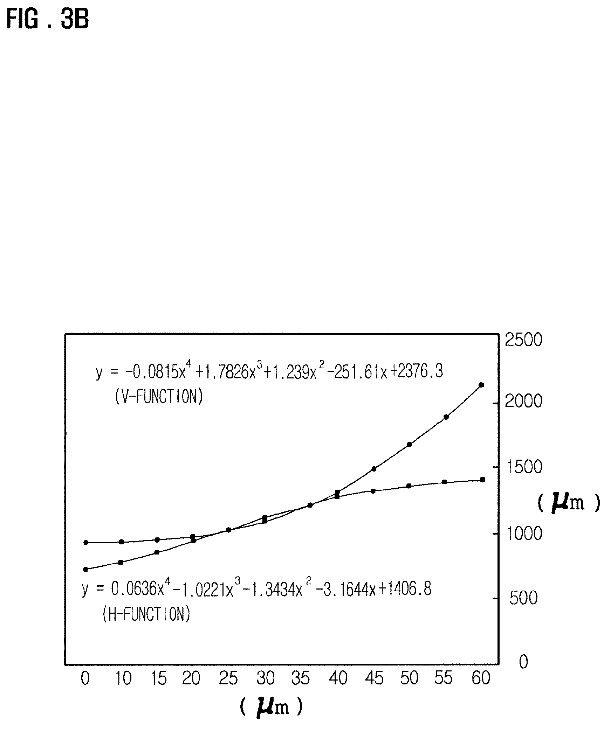

The cavities 217 are dispersed transversely and longitudinally on the upper surface of the light guide plate 207, so that illumination of uniform brightness can be made over the entire surface of the light guide plate 207. As the cavities 217 are closer to the light source 203, the intervals between the cavities 217 are preferably smaller, and vice versa. This will be described in detail with reference to FIGS. 3A and 3B. FIGS. 3A and 3B are views illustrating an application of the FLU of the reflection-type display apparatus according to the exemplary embodiment of the present invention, and the functions of intervals between cavities according to the exemplary embodiment of the present invention.

The intervals between the cavities 217 need to be regulated to obtain uniform illumination. In other words, the densities of the cavities 217, i.e. the numbers of cavities 217 per unit area are regulated to control distribution of brightness according to the distances between the light source 203 and the cavities 217. The sizes or depths of the cavities 217 may be regulated, in which case as the sizes or depths of the cavities 217 increase, the cavities 217 may be undesirably easily seen. The intervals between the cavities 217 is varied according to their distance from the light source 203 and the cavities have a polynomial distribution expressed in Formula 1.

## Formula 1

$$y = Ax^4 + Bx^3 + Cx^2 + Dx + E$$

where y represents intervals between the cavities 217, and x represents distances between the light source 203 and the cavities 217, and A, B, C, D and E are properly selected according to the size and shape of the light guide plate 207. In Formula 1, as the distances between the light source 203 and the cavities 217 become larger, the intervals between the cavities 217 become larger.

As illustrated in FIG. 3A, the cavities 217 are transversely and longitudinally disposed in the light guide plate 207. The interval functions of the cavities 217 in the light guide plate 207 are as illustrated in FIG. 3B. As illustrated in FIG. 3B, as the distances between the light source 203 and the cavities become smaller, the intervals between the cavities 217 become smaller.

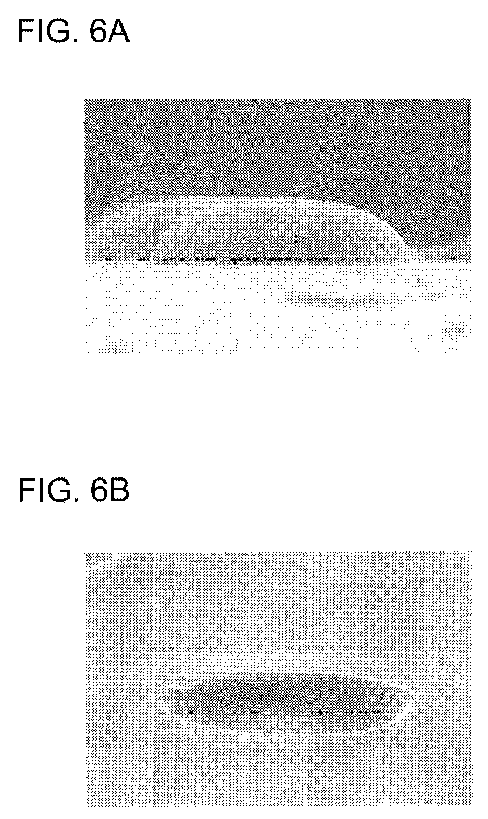

Preferably, the cavities 217 are curved. In other words, the cavities 217 have semi-spherical or conic shapes (refer to FIG. 6B). The cavities 217 have diameters in this exemplary embodiment of about 30 to 50 $\mu$m and depths of about 3 to 10 $\mu$m whereby the cavities are minimally seen and the brightness of illumination is secured.

The film 205 is provided to protect the light guide plate 207 and form a key. The film 205 may be a protection film or a key film, and may be formed by integrating a protection film and a key film.

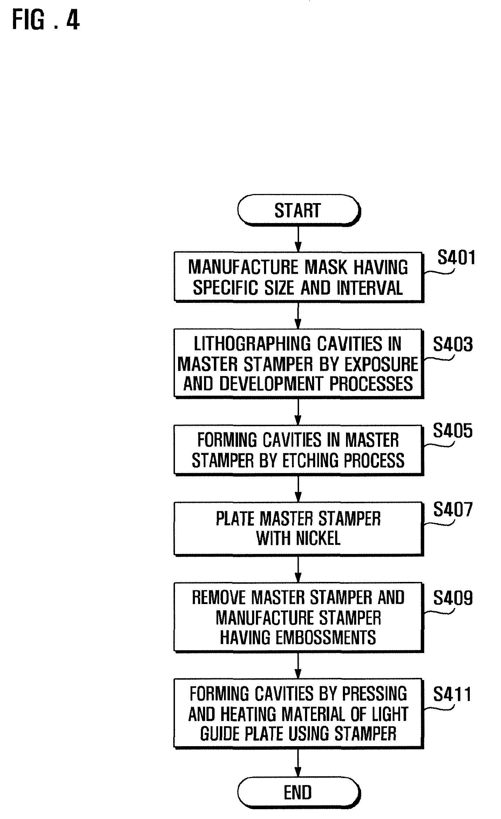

Hereinafter, a method for manufacturing an FLU for a reflection-type display according to an exemplary embodiment of the present invention will be described in detail. FIG. 4 is a flowchart schematically illustrating exemplary steps for manufacturing a light guide plate of the reflection-type display apparatus according to the exemplary embodiment of the present invention.

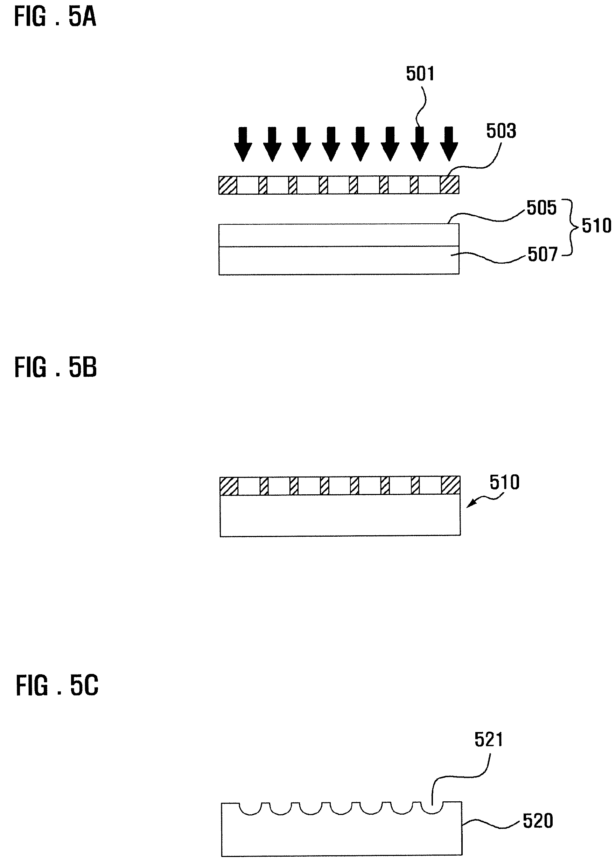

FIGS. 5A to 5G are sectional views schematically illustrating a process of manufacturing the light guide plate of a reflection type display apparatus according to the exemplary embodiment of the present invention.

Referring now to FIGS. 4 and 5A to 5G, the preferred method for manufacturing a light guide plate in a reflection type display apparatus according to the exemplary embodiment of the present invention uses a stamper. In the particular example, as illustrated in FIG. 4, a mask is manufactured so as to have a pattern shape having a specific size and a specific interval (S401). In this case, the shape of the pattern has a specific shape to form cavities. In other words, the mask is manufactured such that the diameters of the cavities finally formed in the light guide plate are 30 to 50 $\mu$m and the depths thereof are 3 to 10 $\mu$m, the cavities are curved, and the intervals between cavities are defined in FIG. 1.

Thereafter, the cavities are lithographed in a master stamper by an exposure process and a development process through use of the mask (S403). The screens showing the performance of the processes are illustrated in FIGS. 5A and 5B. As illustrated in FIG. 5A, the mask 503 manufactured in step S401 is positioned on the master stamper 510, and light such as ultraviolet (UV) rays is projected to the mask 503 to classify the mask into necessary and unnecessary sections, whereby a photoresist (PR) 505 is hardened and an exposure process is carried out. In this case, the master stamper 510 includes a base 507 and a photoresist 505 located on the base 507. Thereafter, as illustrated in FIG. 5B, a development process in which a section of the photoresist 505 of the master stamper that has not been hardened due to failure in supply of the UV rays is removed is carried out.

Thereafter, the cavities are formed in the master cylinder by an etching process (S405). The screen showing the performance of the process is illustrated in FIG. 5C. As illustrated in FIG. 5C, the master stamper 520 having the cavities 521 is manufactured through the etching process. In this case, the depths and shapes of the final cavities are determined according to etching degree. The cavities have spherical or conic shapes so that the surfaces of the cavities are curved. The cavities 217 have diameters of 30 to 50 $\mu$m and depths of 3 to 10 $\mu$m whereby the cavities are minimally seen and the brightness of illumination is secured.

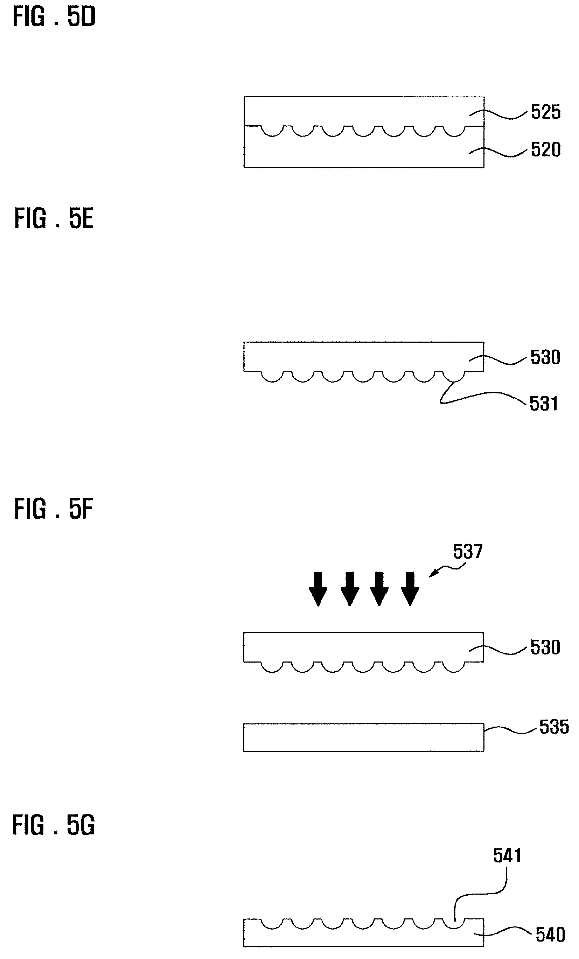

Thereafter, the master cylinder is plated with nickel (Ni) (S407). The screen showing the performance of the process is illustrated in FIG. 5E. A stamper 530 having embossments as illustrated in FIG. 5E is manufactured by removing the master stamper 520 with the master stamper 520 being plated with nickel as in FIG. 5D. The picture of the embossments are illustrated in FIG. 6A. FIG. 6A is a picture of embossments formed in the process of manufacturing the light guide plate of the reflection type display apparatus according to the embodiment of the present invention.

Still referring to FIG. 4, thereafter, cavities are formed in the light guide plate by pressing and heating the material of the light guide plate using the stamper (S411). The screen showing the performance of the process is illustrated in FIGS. 5F and 5G. As illustrated in FIG. 5F, the stamper 530 having the embossments presses and heats the material 535 of the light guide plate. Then, a pressure of 5 to 6 MPa and a temperature of 180 to 200 degrees Celsius are applied. The light guide plate 207 may have a high transparency and may be made of plastic such as polyvinyl chloride (PC), polyethylene terephthalate (PET), polymethylmethacrylate (PMMA), or polyurethane (PU), or silicon.

As illustrated in FIG. 5G, the light guide plate 540 having the cavities 541 is finally manufactured. The picture of the cavities is illustrated in FIG. 6B. FIG. 6A is a photo of the embossments formed in the process of manufacturing the light guide plate of the reflection-type display apparatus according to the processed described hereinabove.

Thereafter, although not illustrated, the light guide plate 540 having the cavities 541 is machined so as to have a thickness of 0.1 to 0.4 mm. As mentioned above, in the case of an inflexible light guide plate 207, the thickness thereof is 0.1 to 0.4 mm, and otherwise, 0.1 to 0.2 mm.

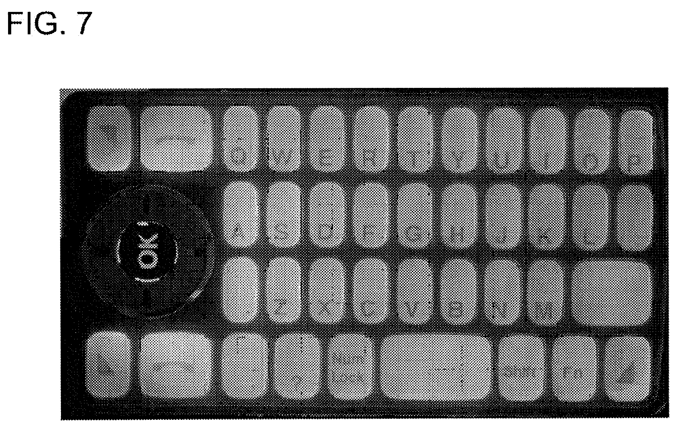

Hereinafter, the evaluation result of the characteristics of the reflection type display apparatus according to the embodiment of the present invention will be described. FIG. 7 is a drawing of one type of a terminal to which the reflection-type display apparatus according to the exemplary embodiment of the present invention can be applied.

As illustrated in FIG. 7, the reflection display apparatus applied to a terminal is measured by using a luminance measurer in a dark room. The measurement result shows a uniformity of above 50 % and a brightness of above 10 nit and the cavities cannot be seen.

The reflection-type display apparatus and the method for manufacturing a light guide plate according to the present invention are not limited to the above-mentioned embodiments, but may be variously modified within the scope of the appended independent claims.

**Claims**

1. A reflection-type display apparatus comprising:

   a reflection-type display (209);
   a light source (203) provided on the reflection-type display (209);
   a light guide plate (207, 540) bonded to an upper surface of the reflection-type display (209) for scattering light introduced from the light source (203) and having cavities (217, 541) transversely and longitudinally disposed therein at predetermined intervals along an upper surface of the light guide plate (207, 540);

the light guide plate (207, 540) being flexible; and

a film (205) bonded to the upper surface of the light guide plate (207, 540) for protecting the upper surface of the light guide plate (207, 540); wherein the cavities(217, 521, 541) have surfaces which are semi-spherical or conic shapes; wherein the thickness of the light guide plate (207, 540) comprises a range of 0.1 to 0.2 mm.

2. The reflection type display apparatus of claim 1, wherein the cavities (217, 521, 541) have surfaces which are curved.

3. The reflection type display apparatus of claims 1 or 2, wherein the diameters of the cavities (217, 541) comprise a range of 30 to 50 $\mu$m and the depths thereof comprises a range 3 to 10 $\mu$m.

4. The reflection type display apparatus of any of claims 1 to 3, wherein the film (205) comprises at least one of a protection film, a key film, and a film (205) in which a protection film and a key film are integrated.

5. The reflection display apparatus according to claim 1, wherein the light guide source is arranged adjacent a side of the reflection-type display (209).

6. A method for manufacturing a light guide plate (207, 540) of a reflection type display apparatus, the method comprising:

manufacturing (S401) a mask (503) in a pattern having a predetermined size and interval; lithographing (S403) cavities (217, 521, 541) in a master stamper (510, 520) by an exposure process and a development process using the mask (503), and forming (S405) cavities (217, 521, 541) by an etching process; plating (S407) nickel on the master stamper (510, 520) and manufacturing (S409) a stamper (530) having embossments by removing (S409) the master stamper (510, 520); and forming cavities (217, 521, 541) by pressing and/or heating (S411) the material (535) of the light guide plate (207, 540) using the stamper (530); bonding a film (205) to the upper surface of the light guide plate (207, 540) for protecting the upper surface of the light guide plate (207, 540); wherein the light guide plate (207, 540) is flexible, wherein the cavities(217, 521, 541) have surfaces which are semi-spherical or conic shapes; and further comprising, after forming cavities (217, 521, 541) in the light guide plate (207, 540), machining the light guide plate (207, 540) such that the thickness thereof comprising a range of 0.1 to 0.2 mm.

7. The method of claim 6, wherein in the forming cavities (217, 521, 541) step, a pressure comprising a range 5 to 6 MPa and a temperature comprising a range of 180 to 200 degrees Celsius are applied.

**Patentansprüche**

1. Reflexionsanzeigevorrichtung umfassend:

eine Reflexionsanzeige (209); eine Lichtquelle (203), die an der Reflexionsanzeige (209) vorgesehen ist; eine Lichtleiterplatte (207, 540), die zum Streuen von Licht, das durch die Lichtquelle (203) eingeleitet wird, mit einer oberen Fläche der Reflexionsanzeige (209) verbunden ist, und die Hohlräume (217, 521, 541) aufweist, die darin entlang einer oberen Fläche der Lichtleiterplatte (207, 540) transversal und longitudinal in vorbestimmten Abständen angeordnet sind; wobei die Lichtleiterplatte (207, 540) flexibel ist; und einen Film (205), der mit der oberen Fläche der Lichtleiterplatte (207, 540) verbunden ist, zum Schützen der oberen Fläche der Lichtleiterplatte (207, 540); wobei Hohlräume(217, 521, 541) Oberflächen haben, die semispärische oder konische Formen aufweisen; wobei die Dicke der Lichtleiterplatte (207, 540) einen Bereich von 0.1 bis 0.2 mm umfasst.

2. Reflexionsanzeigevorrichtung gemäß Anspruch 1, wobei die Hohlräume (217, 521, 541) gekrümmte Oberflächen haben.

3. Reflexionsanzeigevorrichtung gemäß Anspruch 1 oder 2, wobei die Durchmesser der Hohlräume (217, 541) einen Bereich von 30 bis 50 $\mu$m umfassen und die Tiefen davon einen Bereich von 3 bis 10 $\mu$m umfassen.

4. Reflexionsanzeigevorrichtung gemäß irgendeinem der Ansprüche 1 bis 3, wobei der Film (205) wenigstens einen aus einem Schutzfilm, einem Tastenfilm, und einem Film (205), in dem ein Schutzfilm und ein Tastenfilm integriert sind, umfasst.

5. Reflexionsanzeigevorrichtung gemäß Anspruch1, wobei die Lichtleiterquelle seitlich an der Reflexionsanzeige (209) angeordnet ist.

6. Verfahren zur Herstellung einer Lichtleiterplatte (207, 540) einer Reflexionsanzeigevorrichtung, das Verfahren umfassend:

Herstellen (S401) einer Maske (503) in einem Muster mit einer vorgegebenen Größe und Intervall;

Lithographieren (S403) von Hohlräumen (217, 521, 541) in einer Master-Matrize (510, 520) durch einen Belichtungsprozess und einen Entwicklungsprozess unter Verwendung der Maske(503), und Formen (S405) von Hohlräumen (217, 521, 541) durch einen Ätzprozess;

Plattieren (S407) von Nickel auf die Master-Matrize (510, 520) und Herstellen (S409) einer Matrize (530) mit Prägungen (S409) durch Entfernen der Master-Matrize (510, 520); und

Formen von Hohlräumen (217, 521, 541) durch Pressen und/oder Erhitzen (S411) des Materials(535) der Lichtleiterplatte (207, 540) unter Verwendung der Matrize (530);

Verbinden eines Films (205) mit der oberen Fläche der Lichtleiterplatte (207, 540) zum Schutz der oberen Fläche der Lichtleiterplatte (207, 540);

wobei die Lichtleiterplatte (207, 540) flexibel ist, wobei die Hohlräume (217, 521, 541) Oberflächen haben, die semispärische oder konische Formen aufweisen; und ferner umfassend, nach dem Formen der Hohlräume (217, 521, 541) in der Lichtleiterplatte (207, 540), Bearbeiten der Lichtleiterplatte (207, 540) so dass deren Dicke einen Bereich von 0.1 bis 0.2 mm umfasst.

**7.** Verfahren gemäß Anspruch 6, wobei beim Schritt Formen der Hohlräume (217, 521, 541), ein Druck im Bereich von 5 bis 6 MPa und eine Temperatur im Bereich von 180 bis 200 Grad Celsius angewendet werden.

**Revendications**

**1.** Appareil d'affichage du type à réflexion comprenant:

un dispositif d'affichage du type à réflexion (209);

une source de lumière (203) prévue sur le dispositif d'affichage du type à réflexion (209);

une plaque de guidage de lumière (207, 540) liée à la surface supérieure du dispositif d'affichage du type à réflexion (209) pour disperser la lumière introduite depuis la source de lumière (203) et à l'intérieur de laquelle sont disposées des cavités (217, 521, 541) de manière transversale et longitudinale par intervalles prédéterminés sur la surface supérieure de la plaque de guidage de lumière (207, 540);

la plaque de guidage de lumière (207, 540) étant flexible; et

un film (205) lié à la surface supérieure de la plaque de guidage de lumière (207, 540) pour protéger la surface supérieure de la plaque de guidage de lumière (207, 540);

dans lequel les cavités (217, 521, 541) possèdent des surfaces qui sont de forme semi-sphérique ou conique;

dans lequel l'épaisseur de la plaque de guidage de lumière (207, 540) se situe dans la plage allant de 0,1 à 0,2 mm.

**2.** Appareil d'affichage du type à réflexion selon la revendication 1, dans lequel les cavités (217, 521, 541) possèdent des surfaces qui sont incurvées.

**3.** Appareil d'affichage du type à réflexion selon les revendications 1 ou 2, dans lequel les diamètres des cavités (217, 541) se situent dans la plage allant de 30 à 50 $\mu$m et leur profondeur se situe dans la plage allant de 3 à 10 $\mu$m.

**4.** Appareil d'affichage du type à réflexion selon l'une quelconque des revendications 1 à 3, dans lequel le film (205) comprend au moins un film parmi un film de protection, un film à touches et un film (205) dans lequel sont intégrés un film de protection et un film à touches.

**5.** Appareil d'affichage du type à réflexion selon la revendication 1, dans lequel la source de guidage de lumière est agencée de manière adjacente à un côté du dispositif d'affichage du type à réflexion (209).

**6.** Procédé de fabrication d'une plaque de guidage de lumière (207, 540) d'un appareil d'affichage du type à réflexion, le procédé comprenant:

la fabrication (S401) d'un masque (503) selon un motif ayant des dimensions et un intervalle prédéterminés ;

la lithographie (S403) de cavités (217, 521, 541) dans une matrice mère (510, 520) au moyen d'un processus d'exposition et d'un processus de développement utilisant le masque (503), et la formation (S405) des cavités (217, 521, 541) au moyen d'un processus de gravure ;

le dépôt (S407) de nickel sur la matrice mère (510, 520) et la fabrication (S409) d'une matrice (530) comportant des bossages par retrait (S409) de la matrice mère (510, 520) ; et

la formation des cavités (217, 521, 541) par pressage et/ou chauffage (S411) du matériau (S35) sur la plaque de guidage de lumière (207, 540) en utilisant la matrice (530) ;

la liaison d'un film (205) à la surface supérieure de la plaque de guidage de lumière (207, 540) pour protéger la surface supérieure de la plaque de guidage de lumière (207, 540) ;

dans lequel la plaque de guidage de lumière (207, 540) est flexible,

dans lequel les cavités (217, 521, 541) possèdent des surfaces qui sont de forme semi-sphérique ou conique; et comprenant en outre, après la formation des cavités (217, 521, 541) dans la plaque de guidage de lumière (207, 540), l'usinage de la plaque de guidage de lumière (207, 540) de façon que son épaisseur se situe dans la plage allant de 0,1 à 0,2 mm.

7. Procédé selon la revendication 6, dans lequel, à l'étape de formation des cavités (217, 521, 541), une pression se situant dans la plage allant de 5 à 6 MPa et une température se situant dans la plage allant de 180 à 200 degrés Celsius sont appliquées.

# FIG . 1
# (PRIOR ART)

# FIG . 2A

# FIG . 2B

217

205

207

209

# FIG . 3A

42.19

H

V

217

207

65.73

X

Y

LIGHT SOURCE

203

## FIG . 3B

$y = -0.0815x^4 +1.7826x^3 +1.239x^2 -251.61x +2376.3$
(V-FUNCTION)

$y = 0.0636x^4 -1.0221x^3 -1.3434x^2 -3.1644x +1406.8$
(H-FUNCTION)

$(\mu m)$

$(\mu m)$

# FIG . 4

```
            ┌─────────────┐
            │    START    │
            └──────┬──────┘
                   ▼
    ┌───────────────────────────┐  S401
    │  MANUFACTURE MASK HAVING   │
    │  SPECIFIC SIZE AND INTERVAL │
    └─────────────┬─────────────┘
                  ▼
    ┌───────────────────────────┐  S403
    │   LITHOGRAPHING CAVITIES IN │
    │ MASTER STAMPER BY EXPOSURE  │
    │   AND DEVELOPMENT PROCESSES │
    └─────────────┬─────────────┘
                  ▼
    ┌───────────────────────────┐  S405
    │   FORMING CAVITIES IN MASTER│
    │   STAMPER BY ETCHING PROCESS│
    └─────────────┬─────────────┘
                  ▼
    ┌───────────────────────────┐  S407
    │     PLATE MASTER STAMPER    │
    │        WITH NICKEL          │
    └─────────────┬─────────────┘
                  ▼
    ┌───────────────────────────┐  S409
    │   REMOVE MASTER STAMPER AND │
    │     MANUFACTURE STAMPER     │
    │     HAVING EMBOSSMENTS      │
    └─────────────┬─────────────┘
                  ▼
    ┌───────────────────────────┐  S411
    │  FORMING CAVITIES BY PRESSING│
    │ AND HEATING MATERIAL OF LIGHT│
    │  GUIDE PLATE USING STAMPER  │
    └─────────────┬─────────────┘
                  ▼
            ┌─────────────┐
            │     END     │
            └─────────────┘
```

FIG . 5A

501

503

505
507 } 510

FIG . 5B

510

FIG . 5C

521

520

FIG . 5D

525

520

FIG . 5E

530

531

FIG . 5F

537

530

535

FIG . 5G

541

540

FIG. 6A

FIG. 6B

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20070121905

- US 20040228112 A